# EUROPÄISCHE PATENTSCHRIFT

(11) **EP 4 493 834 B1**
(45) Veröffentlichungstag und Bekanntmachung des Hinweises auf die Patenterteilung: **11.11.2026**
(21) Anmeldenummer: 23709314.1
(22) Anmeldetag: 17.02.2023
(51) Int. Cl.: F16C 41/00, F16C 19/18, F16C 33/58, F16C 33/60, G01P 1/00, G01P 3/44

(54) **RUNDTISCHLAGER ALS ZWEIREIHIGES AXIALSCHRÄGKUGELLAGER**
ROTARY TABLE BEARING AS A DOUBLE-ROW ANGULAR CONTACT THRUST BALL BEARING
PALIER DE TABLE ROTATIVE COMME BUTÉE À BILLES À CONTACT OBLIQUE À DEUX RANGÉES

(30) Priorität: 15.03.2022 DE 102022106014
(43) Veröffentlichungstag der Anmeldung: 22.01.2025
(73) Patentinhaber: Schaeffler Technologies AG & Co. KG, 91074 Herzogenaurach (DE)
(72) Erfinder: HAERTEL, Martin, 70182 Stuttgart (DE); STRAUB, Christian, 87439 Kempten (DE); RUDY, Dietmar, 66501 Kleinbundenbach (DE)
(74) Vertreter: Schaeffler Technologies
(86) Internationale Anmeldenummer: PCT/DE2023/100131
(87) Internationale Veröffentlichungsnummer: WO 2023/174472

(56) Entgegenhaltungen:
- EP-A2- 1 342 633
- EP-A2- 1 705 089
- DE-A1- 102011 082 221
- DE-A1- 102014 203 517
- DE-A1- 102015 215 834
- DE-T5- 112006 000 412
- JP-A- 2006 153 273
- JP-A- H1 123 600
- US-A1- 2009 256 550
- US-B2- 9 395 389

## Beschreibung

Die Erfindung betrifft Rundtischlager als zweireihiges Axialschrägkugellager, umfassend einen Außenring sowie einen Innenring bestehend aus zwei miteinander axial verbundenen Ringelementen, wobei am Außenring zwei äußere Laufbahnen und an jedem Ringelement eine innere Laufbahn vorgesehen ist, auf welchen äußeren und inneren Laufbahnen in zwei Reihen Kugeln laufen. Ein solcher Rundtischlager ist in DE 10 2015 215834 A1 offenbart.

Derartige zweireihige Axialschrägkugellager kommen in unterschiedlichsten Bereichen überall dort zur Anwendung, wo sowohl radiale als auch axiale Lasten über das Lager abzustützen sind. Ein Einsatzbeispiel ist die Verwendung eines solchen zweireihigen Axialschrägkugellagers als Rundtischlager, über das ein schnelldrehender Rundtisch einer Werkzeugmaschine gelagert werden kann. Das Axialschrägkugellager ermöglicht es, den Rundtisch mit hoher Drehzahl zu rotieren, insbesondere mit Drehzahlen, die mit üblicherweise als Rundtischlager verwendeten Axial-Radial-Lagern nicht erreicht werden können. Der Außenring des Axialschrägkugellagers ist mit dem positionsfesten Maschinengestell oder dergleichen verbunden, während der Innenring mit dem Rundtisch verbunden ist, beispielsweise über ein tischseitig vorgesehenes Rohr, an dem außenseitig der Innenring angeordnet ist, und das das Axialschrägkugellager durchgreift.

Bei einer derartigen Anwendung als Rundtischlager ist es häufig erforderlich, hochgenau die Drehstellung des Rundtischs relativ zum positionsfesten Maschinengestell zu erfassen, also die exakte Winkellage. Hierzu ist der zusätzliche Verbau einer Messeinrichtung erforderlich, über die die Winkelerfassung erfolgt. Diese Messeinrichtung wird vorzugsweise in der Ebene des Axialschrägkugellagers, das wie beschrieben von dem Rohr des Rundtischs durchgriffen ist, angeordnet, wozu gestellseitig eine entsprechende Halterung vorzusehen ist, um die Messeinrichtung in der Lagerebene positionieren zu können. Denn in der Lagerebene ist eine etwaige Verkippung innerhalb des Lagers minimal, während bei Anordnung der Messeinrichtung beispielsweise am unteren Ende des beschriebenen Rohres ein deutlich größerer Kippwinkel auftreten kann, weshalb eine Messung in diesem Bereich zu ungenau wäre. Unabhängig davon ist die derartige Integration der Messeinrichtung dahingehend von Nachteil, als einerseits ein entsprechender Aufwand hinsichtlich der Halterung und der Positionierung der Messeinrichtung im Rohrinneren in der Lagerebene erforderlich ist, wie auch der Umstand, dass hierdurch natürlich der Innenraum des Rohres belegt ist, so dass durch das Rohr beispielsweise keine Kabel oder Leitungen geführt oder beispielsweise ein Ölverteiler oder dergleichen integriert werden können, da die Achsmitte blockiert ist.

Der Erfindung liegt das Problem zugrunde, ein dem gegenüber verbessertes Axialschrägkugellager anzugeben.

Zur Lösung dieses Problems ist erfindungsgemäß ein Rundtischlager als zweireihiges Axialschrägkugellager der eingangs genannten Art vorgesehen, das sich dadurch auszeichnet, dass ein Ringelement mit einem Ringabschnitt axial über den Außenring ragt, wobei an einer äußeren zylindrischen Mantelfläche des Ringabschnitts eine Maßverkörperung vorgesehen ist, und dass am Außenring eine Messeinrichtung mit einem die Maßverkörperung erfassenden Messmittel, das radial benachbart und über einen Messspalt beabstandet zur Maßverkörperung positioniert ist, vorgesehen ist.

Das erfindungsgemäße Rundtischlager als zweireihiges Axialschrägkugellager ist mit einer integrierten Winkelmesseinrichtung ausgerüstet, das heißt, dass die Winkelmesseinrichtung Teil des Axialschrägkugellagers ist und folglich mit Verbau des Axialschrägkugellager gleichzeitig montiert und positioniert ist. Um dies zu ermöglichen, ist der zweiteilige Innenring zumindest in Bezug auf eines seiner Ringelemente spezifisch ausgeführt. Das Ringelement weist einen Ringabschnitt auf, der axial über den Außenring ragt, was es ermöglicht, an der äußeren zylindrischen Mantelfläche dieses Ringabschnitts eine Maßverkörperung anzuordnen. Diese Maßverkörperung ist ein über die Messeinrichtung erfassbares Winkelmaß, das eine äußerst hochauflösende und sehr exakte Winkelermittlung ermöglicht. Die Messeinrichtung ist am Außenring angeordnet und weist ein Messmittel auf, das über einen sehr schmalen Spalt radial benachbart zur Maßverkörperung angeordnet ist, so dass das Messmittel die Maßverkörperung erfassen kann.

Dieses Axialschrägkugellager weist eine Reihe von Vorteilen auf. Zum einen ermöglicht es wie beschrieben den Rundtisch auch mit hohen bis sehr hohen Drehzahlen zu rotieren, was mit Axial-Radial-Lagern nicht möglich ist. Darüber hinaus ermöglicht die Integration des Winkelmesssystems die Vorkonfiguration des Axialschrägkugellagers, nachdem sowohl die Maßverkörperung an dem Ringabschnitt des Innenrings als auch die Messeinrichtung am Außenring bereits werksseitig montiert und der zwischen dem Messmittel und der Maßverkörperung gegebene Messspalt bereits werksseitig sehr exakt eingestellt werden kann. Das heißt, dass sehr umfangreiche, häufig mehrere Versuche erfordernde iterative Einstell- und Justiertätigkeiten im Rahmen der Montage entfallen können. Ebenfalls kann natürlich grundsätzlich die Montage des Winkelmesssystems aufgrund der Integration im Lager selbst entfallen.

Und schließlich wird aufgrund der Integration des Winkelmesssystems im Axialschrägkugellager selbst die Achsmitte nicht blockiert, da das Winkelmesssystem letztlich in axialer Verlängerung am Axialschrägkugellager angeordnet ist, nicht aber radial innerhalb des Axialschrägkugellagers liegt. Demzufolge ist die Achsmitte nicht blockiert und kann zur Durchführung oder Integration anderer Bauteile genutzt werden.

Die Messeinrichtung selbst ist an einer axialen Ringfläche des Außenrings angeordnet, sitzt also axial auf dem Außenring und ist damit von Haus aus sehr nahe zur Außenmantelfläche des Ringabschnitts, an dem die Maßverkörperung vorgesehen ist. Dabei kann gemäß einer ersten Erfindungsvariante ein Adapter vorgesehen sein, über den die Messeinrichtung am Außenring angeordnet ist. Über diesen Adapter ist es möglich, die Messeinrichtung quasi standardisiert auszuführen und an unterschiedlich dimensionierten Axialschrägkugellagern zu verbauen, da etwaige axiale Positionierungsunterschiede der Messeinrichtung bezüglich der Maßverkörperung über den entsprechenden lagerspezifischen Adapter kompensiert werden können. Die Messeinrichtung respektive deren Gehäuse weist also eine einheitliche Größe auf, wobei die axiale Ist-Position benachbart zur Maßverkörperung über den spezifischen Adapter eingestellt wird.

Alternativ zu der Verwendung eines solchen Adapters ist es natürlich auch denkbar, die Messeinrichtung direkt am Außenring anzuordnen, wobei dann für unterschiedliche Lagergrößen unterschiedlich dimensionierte Messeinrichtungen respektive Messeinrichtungsgehäuse vorzusehen sind.

Die Messeinrichtung selbst weist zweckmäßigerweise ein Gehäuse auf, in dem das Messmittel aufgenommen ist. Dieses Gehäuse bildet gleichzeitig die Schnittstelle zu dem Adapter oder direkt zum Außenring, je nachdem wie die Anordnung erfolgt. Es weist eine oder mehrere entsprechende Bohrungen zur Aufnahme von Befestigungsschrauben oder Ähnlichem auf. Das Gehäuse ist beispielsweise aus Kunststoff, was eine einfache Herstellung ermöglicht.

Das Messmittel selbst kann unterschiedlicher Art sein respektive auf unterschiedliche Messverfahren ausgelegt sein. Es kann sich um ein induktives, ein optisches oder ein magnetoresistives Messmittel handeln, alle Messverfahren lassen eine hochexakte Positionserfassung zu. Die über das Messmittel ausgegebenen Messsignale werden über geeignete Signalleitungen zu einer entsprechenden Steuerungseinrichtung geführt, die insbesondere den Rotationsbetrieb des Rundtischs steuert. Diese Signalleitungen können fester integrierter Bestandteil der Messeinrichtung sein. Denkbar ist es aber auch, dass an der Messeinrichtung entsprechende Schnittstellen, also z.B. Steckkontakte vorgesehen ist, die eine entsprechende Signalübertragung, sei sie analog, sei sie seriell, erlauben.

Die Maßverkörperung ist wie beschrieben an der zylindrischen Außenmantelfläche des axialvorspringenden Ringabschnitts vorgesehen. Bevorzugt ist diese Maßverkörperung ein auf die Metallfläche aufgeschrumpfter, mit einer Winkelbemaßung versehener Ring oder umfasst einen solchen. Die Winkelbemaßung kann beispielsweise durch Ätzen des metallischen Ringes aufgebracht sein. Der Ring wird auf den Ringabschnitt aufgeschrumpft, wozu entweder der Ring etwas erwärmt wird, so dass er sich weitet, oder der Ringabschnitt gekühlt wird, so dass sich der Durchmesser des Ringabschnitts geringfügig verringert, wobei sowohl eine Erwärmung als auch eine Abkühlung erfolgen kann. Nach Überstreifen des Ringes und Temperaturausgleich sitzt der Metallring schließlich unverrückbar auf dem Ringabschnitt, wobei der Ring anschließend noch mit einer Schutzabdeckung belegt werden kann.

Das Axialschrägkugellager ist wie beschrieben als Rundtischlager ausgeführt respektive als ein solches ausgelegt und zu verwenden. Hierauf ist aber der Einsatz des Axialschrägkugellagers nicht beschränkt. Vielmehr sind auch andere Anwendungen denkbar, bei denen eine hochgenaue Winkelerfassung zweier relativ zueinander verdrehbarer Bauteile erforderlich ist.

Neben dem Axialschrägkugellager selbst betrifft die Erfindung ferner eine Werkzeugmaschine zur spanabhebenden Materialbearbeitung eines Werkstücks, umfassend ein Maschinengestell und einen an diesem durch ein Axialschrägkugellager der vorstehend beschriebenen Art um eine Drehachse drehbar gelagerten Tisch zur Aufnahme des Werkstücks.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Schnittansicht eines erfindungsgemäßen Axialschrägkugellagers, als perspektivische Teilansicht, und
- Figur 2: eine perspektivische Teilansicht des Axialschrägkugellagers aus Figur 1, ungeschnitten.

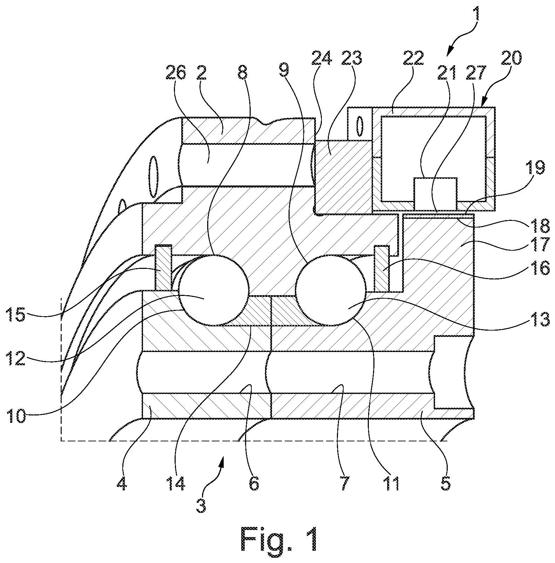

Figur 1 zeigt eine perspektivische geschnittene Teilansicht eines erfindungsgemäßen Axialschrägkugellagers 1, umfassend einen Außenring 2 sowie einen Innenring 3, der aus zwei axial miteinander verbundenen Ringelementen 4, 5 besteht, die mittels geeigneter Verbindungsschrauben, die in entsprechende Aufnahmebohrungen 6, 7 in den Ringelementen eingeschraubt werden, axial miteinander verbunden sind. Am Außenring sind zwei äußere Laufbahnen 8, 9 ausgebildet, denen entsprechende, an den beiden Ringelementen 4, 5 ausgebildete Laufbahnen 10, 11 zugeordnet sind. Auf den Laufbahnen 8 und 10 laufen Kugeln 12 einer ersten Kugelreihe, auf den Laufbahnen 9, 11 laufen Kugeln 13 einer zweiten Kugelreihe. Die Kugeln 12, 13 sind in einem gemeinsamen Käfig 14 geführt und gehaltert. Axial ist das Axialschrägkugellager 1 über zwei Dichtelemente 15, 16 geschlossen, so dass etwaiges Schmiermittel im eigentlichen Wälzbereich zurückgehalten wird.

Wie Figur 1 zeigt, ist das Ringelement 5 axial gesehen breiter als das Ringelement 4. Es ragt axial über den Außenring mit einem Ringabschnitt 17 hervor, der als radial nach außenragender Ringflansch ausgeführt ist. An der äußeren Mantelfläche 18 des Ringabschnitts 17 ist eine Maßverkörperung 19 angeordnet, bei der es sich um einen aufgeschrumpften, mit einem geätzten Winkelmaß versehenen Metallring handelt, der gegebenenfalls von einem Schutzring abgedeckt ist. Diese Maßverkörperung 19 ist positionsfest und unverrückbar mit dem Ringabschnitt 17 und damit mit dem Innenring 3 verbunden.

Vorgesehen ist des Weiteren eine Messeinrichtung 20, umfassend ein hier nur gestrichelt dargestelltes Messmittel 21, das in der Lage ist, mit der Maßverkörperung 19 zu interagieren, also die Winkelbemaßung messtechnisch zu erfassen, so dass hierüber hochgenau seitens einer gekoppelten Steuerungseinrichtung die Ist-Drehstellung des Innenrings 3 relativ zum positionsfesten Außenring 2 erfasst werden kann. Das Messmittel 21 ist ein geeigneter Messsensor, der zur induktiven, optischen oder magnetoresistiven Messung ausgebildet ist.

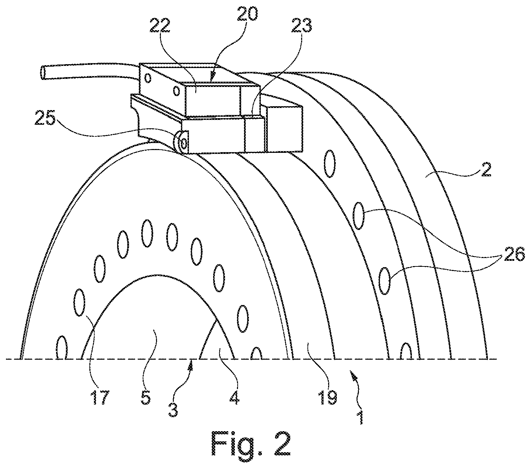

Das Messmittel 21 ist in einem entsprechenden Gehäuse 22 aufgenommen, das bevorzugt ein Kunststoffbauteil ist. Zur Fixierung der Messeinrichtung 20 ist ein Adapter 23 vorgesehen, der an einer axialen Ringfläche 24 des Außenrings 2 axial aufsitzt, und auf dem axial wiederum die Messeinrichtung 20 aufsitzt. Zur Befestigung weist die Messeinrichtung 20 respektive das Gehäuse 22 mehrere Bohrungen 25 auf, wie auch der Adapter 23 entsprechende, mit den Bohrungen 25 fluchtende Bohrungen aufweist, durch die Befestigungsschrauben geführt werden, die sodann in entsprechende Bohrungen 26 am Außenring 2 eingeschraubt werden, wie in Figur 2 gezeigt.

Die Messeinrichtung 20 respektive das Gehäuse 22 ist bevorzugt als standardisiertes Bauteil ausgeführt, so dass die Messeinrichtung 20 in identischer Form an unterschiedlich groß dimensionierten Axialschrägkugellagern angeordnet werden kann. Die axiale Position benachbart zur Maßverkörperung 19 wird durch den spezifisch ausgelegten Adapter eingestellt, der je nach erforderlicher Position breiter oder schmäler ist. Über die Verbindung der Messeinrichtung 20 zum Adapter 23 wird gleichzeitig auch der Messspalt 27 zwischen dem Messmittel 21 und der Maßverkörperung 19 definiert und eingestellt. Aufgrund der Integration des gesamten Winkelmesssystems bestehend aus Maßverkörperung 19 und Messeinrichtung 20 im respektive am Axialschrägkugellager 1 selbst kann dieses Winkelmesssystem bereits werkseitig vormontiert werden, wenn das Lager zusammengebaut ist, so dass etwaige Montagetätigkeiten dieses Winkelmesssystems vor Ort nicht erforderlich sind. Darüber hinaus kann werkseitig auch sogleich die exakte Positionierung des Messmittels 21 bezüglich der Maßverkörperung 19 wie auch die Breite des Messspalts 27 eigestellt und überprüft werden, so dass das fertige Axialschrägkugellager 1 lediglich noch zu verbauen ist.

Wie die Figuren 1 und 2 zeigen, ist das Axialschrägkugellager 1 eine äußerst kompakte Einheit trotz Integration des Winkelmesssystems, das radial nur vernachlässigbar aufbaut und lediglich eine geringe axiale Verlängerung resultierend aus dem axialen Überstand des Ringabschnitts 17 und der axialen Anordnung der Messeinrichtung 20 zeigt. Die Integration in ein Maschinengestell ist daher ohne weiteres möglich. Die Figuren zeigen auch anschaulich, dass keinerlei radial innerhalb des Innenrings 2 liegender Raum mit dem Winkelmesssystem belegt wird, so dass in der Montagesituation in diesen Bereich ohne weiteres Drittgegenstände wie Kabel, Leitungen, Schläuche oder sonstiges verlegt oder verbaut werden können.

Bei dem Axialschrägkugellager 1 handelt es sich um ein Rundtischlager, das beispielsweise in einer Werkzeugmaschine zur spanabhebenden Bearbeitung eines Werkstücks verbaut wird. Dabei wir es mit seinem Außenring 2 positionsfest mit einem Maschinengestell oder dergleichen verbunden, sei es direkt oder indirekt, während es mit seinem Innenring 3 mit einem um eine Drehachse drehbar gelagerten Tisch zur Aufnahme eines Werkstücks, ebenfalls entweder direkt oder indirekt, verbunden ist.

### Bezugszeichenliste

- 1: Axialschrägkugellager
- 2: Außenring
- 3: Innenring
- 4: Ringelement
- 5: Ringelement
- 6: Aufnahmebohrung
- 7: Aufnahmebohrung
- 8: Laufbahn
- 9: Laufbahn
- 10: Laufbahn
- 11: Laufbahn
- 12: Kugel
- 13: Kugel
- 14: Käfig
- 15: Dichtelemente
- 16: Dichtelemente
- 17: Ringabschnitt
- 18: Mantelfläche
- 19: Maßverkörperung
- 20: Messeinrichtung
- 21: Messmittel
- 22: Gehäuse
- 23: Adapter
- 24: Ringfläche
- 25: Bohrung
- 26: Bohrung
- 27: Messspalt

## Patentansprüche

1. Rundtischlager als zweireihiges Axialschrägkugellager, umfassend einen Außenring (2) sowie einen Innenring (3) bestehend aus zwei miteinander axial verbundenen Ringelementen (4, 5), wobei am Außenring (2) zwei äußere Laufbahnen (8, 9) und an jedem Ringelement (4, 5) eine innere Laufbahn (10, 11) vorgesehen ist, auf welchen äußeren und inneren Laufbahnen (8, 9, 10, 11) in zwei Reihen Kugeln (12, 13) laufen, **dadurch gekennzeichnet, dass** ein Ringelement (4, 5) mit einem Ringabschnitt (17) axial über den Außenring (2) ragt, wobei an einer äußeren zylindrischen Mantelfläche (18) des Ringabschnitts (17) eine Maßverkörperung (19) vorgesehen ist, und dass am Außenring (2) eine Messeinrichtung (20) mit einem die Maßverkörperung (19) erfassenden Messmittel (21), das radial benachbart und über einen Messspalt (27) beabstandet zur Maßverkörperung (19) positioniert ist, vorgesehen ist.

2. Rundtischlager nach Anspruch 1, **dadurch gekennzeichnet, dass** die Messeinrichtung (20) an einer axialen Ringfläche (24) des Außenrings (2) angeordnet ist.

3. Rundtischlager nach Anspruch 1 oder 2, **dadurch gekennzeichnet, dass** ein Adapter (23) vorgesehen ist, über den die Messeinrichtung (20) am Außenring (2) angeordnet ist.

4. Rundtischlager nach Anspruch 1 oder 2, **dadurch gekennzeichnet, dass** die Messeinrichtung (20) direkt am Außenring (2) angeordnet ist.

5. Rundtischlager nach einem der vorangehenden Ansprüche, **dadurch gekennzeichnet, dass** die Messeinrichtung (20) ein Gehäuse (22) aufweist, in dem das Messmittel (21) aufgenommen ist.

6. Rundtischlager nach einem der vorangehenden Ansprüche, **dadurch gekennzeichnet, dass** das Messmittel (21) ein induktives oder optisches oder magnetoresistives Messmittel (21) ist.

7. Rundtischlager nach einem der vorangehenden Ansprüche, **dadurch gekennzeichnet, dass** die Maßverkörperung (19) ein auf die Mantelfläche (18) aufgeschrumpfter, mit einer Winkelbemaßung versehener Ring ist oder reinen solchen umfasst.

8. Werkzeugmaschine zur spanabhebenden Materialbearbeitung eines Werkstücks, umfassend ein Maschinengestell und einen an diesem durch ein Axialschrägkugellager (1) nach einem der vorangehenden Ansprüche um eine Drehachse drehbar gelagerten Tisch zur Aufnahme des Werkstücks.

## Claims

1. A rotary table bearing as a double-row angular contact thrust ball bearing, comprising an outer ring (2) and an inner ring (3) consisting of two axially interconnected ring elements (4, 5), wherein the outer ring (2) has two outer raceways (8, 9) and each ring element (4, 5) has an inner raceway (10, 11), on which outer and inner raceways (8, 9, 10, 11) balls (12, 13) run in two rows, **characterised in that** a ring section (17) of a ring element (4, 5) projects axially beyond the outer ring (2), wherein a measuring body (19) is provided on an outer cylindrical lateral surface (18) of the ring section (17), and **in that** a measuring device (20) with a measuring means (21) that detects the measuring body (19) is provided on the outer ring (2), said measuring means being positioned radially adjacently to the measuring body (19) and at a distance thereto across a measuring gap (27).

2. The rotary table bearing according to claim 1, **characterised in that** the measuring device (20) is arranged on an axial ring surface (24) of the outer ring (2).

3. The rotary table bearing according to claim 1 or 2,
**characterised in that** an adapter (23) is provided, via which the measuring device (20) is arranged on the outer ring (2).

4. The rotary table bearing according to claim 1 or 2,
**characterised in that** the measuring device (20) is arranged directly on the outer ring (2).

5. The rotary table bearing according to any one of the preceding claims, **characterised in that** the measuring device (20) has a housing (22) in which the measuring means (21) is accommodated.

6. The rotary table bearing according to any one of the preceding claims, **characterised in that** the measuring means (21) is an inductive or optical or magnetoresistive measuring means (21).

7. The rotary table bearing according to any one of the preceding claims, **characterised in that** the measuring body (19) is or simply comprises a ring shrunk onto the lateral surface (18) and provided with an angular scale.

8. A machine tool for machining a workpiece by removing material, comprising a machine frame and a table rotatably mounted thereon about an axis of rotation by means of an angular contact thrust ball bearing (1) according to any one of the preceding claims for accommodating the workpiece.

## Revendications

1. Palier de table rotative comme butée à billes à contact oblique axial à deux rangées, comprenant une bague extérieure (2) et une bague intérieure (3) constituées de deux éléments annulaires (4, 5) reliés axialement l'un à l'autre, la bague extérieure (2) comportant deux chemins de roulement extérieurs (8, 9) et chaque élément annulaire (4, 5) comportant un chemin de roulement intérieur (10, 11), sur lesdits chemins de roulement extérieurs et intérieur (8, 9, 10, 11) se déplacent des billes (12, 13) sur deux rangées, **caractérisé en ce qu'**un élément annulaire (4, 5) muni d'une section annulaire (17) fait saillie axialement de la bague extérieure (2), un étalon de mesure (19) étant disposé sur une surface extérieure (18) cylindrique de la section annulaire (17), et **caractérisé en ce que**, sur la bague extérieure (2), un dispositif de mesure (20) comporte un moyen de mesure (21) détectant l'étalon de mesure (19), qui est positionné de manière radialement adjacente à l'étalon de mesure (19) et qui en est espacé du moyen par une fente de mesure (27).

2. Palier de table rotative selon la revendication 1, **caractérisé en ce que** le dispositif de mesure (20) est agencé sur une surface annulaire axiale (24) de la bague extérieure (2).

3. Palier de table rotative selon la revendication 1 ou 2,
**caractérisé en ce qu'**un adaptateur (23) sert à agencer le dispositif de mesure (20) sur la bague extérieure (2).

4. Palier de table rotative selon la revendication 1 ou 2,
**caractérisé en ce que** le dispositif de mesure (20) est agencé directement sur la bague extérieure (2).

5. Palier de table rotative selon l'une quelconque des revendications précédentes, **caractérisé en ce que** le dispositif de mesure (20) comporte un boîtier (22) dans lequel est reçu le moyen de mesure (21).

6. Palier de table rotative selon l'une quelconque des revendications précédentes, **caractérisé en ce que** le moyen de mesure (21) est un moyen de mesure (21) inductif ou optique ou magnétorésistif.

7. Palier de table rotative selon l'une quelconque des revendications précédentes, **caractérisé en ce que** l'étalon de mesure (19) est une bague emmanchée sur la surface extérieure (18) comportant une gradation angulaire ou comprend une telle bague.

8. Machine-outil destinée à l'usinage par enlèvement de copeaux d'une pièce, comprenant un bâti de machine et une table montée sur celui-ci de façon à pouvoir tourner autour d'un axe de rotation au moyen d'une butée à billes à contact oblique axial (1) selon l'une quelconque des revendications précédentes et destinée à recevoir la pièce.
